# EUROPEAN PATENT APPLICATION

(11) **EP 4 300 735 A1**
(43) Date of publication of application: **03.01.2024**
(21) Application number: 23162784.5
(22) Date of filing: 20.03.2023
(51) Int. Cl.: H02B 11/133, H02B 11/28

(54) **CABLE ACCESS ARRANGEMENT FOR A SWITCHGEAR CUBICLE**

(30) Priority: 27.06.2022 IN 202231036812
(71) Applicant: Schneider Electric Industries SAS, 92500 Rueil-Malmaison (FR)
(72) Inventor: MAHURAKAR, Jayavant Narasing, 591305 Belgaum (IN); SAHA, Saurabh, 560067 Bangalore (IN)
(74) Representative: Swea IP Law AB

(57) **Abstract**

The present invention relates to a cable access arrangement (100) having interlocking mechanism for accessing cables within an electrical cubicle (101). The cable access arrangement (100) comprises an earthing switch assembly (110), a chamber (124) for housing an electrical interrupter (122), a switching key (128) to operate a cable access door (105 or 107) of said electrical cubicle (101), and a key-lock arrangement to receive said switching key (128). While said earthing switch assembly (110) is in an OFF or open condition and said electrical interrupter (122) is at racked-in condition, said switching key (128) is captive between said earthing switch assembly (110) and said key-lock arrangement (104). Whereas while said earthing switch assembly (110) is in an ON or closed condition, and said electrical interrupter (122) is at test or racked-out condition, said access hole (103) is restricted from insertion of said operating handle (102) such that said switching key (128) is free from said key-lock arrangement (104) to operate said cable access door (105 or 107) of said electrical cubicle (101).

## Description

### Field of invention

The present invention in general is related to mechanisms to access inner cables set up within of switchgear cubicle with safety interlock mechanism. More particularly, the invention relates to a cable access and release arrangement that can be operated using earthing switch operating key to access the rear cable access door and front door of the switchgear cubicle. The invention also finds its utility in various motor controlled switchgear drawer units having an interlock mechanism to access the cables and other electric conduits set up therein without affecting the interlock mechanism.

### Background of the invention

Switchgear assemblies includes switchgear cubicles consisting of electrical apparatus housed in metal cabinets with associated conductors, including bus bars and cabling, for connecting electrical apparatus in appropriate locations within an electrical distribution system. In a general practicable arrangement, the electrical apparatus is installed in vertically stacked cells within the cabinet. Each of the cells has a separate door in front of the cabinet through which the electrical apparatus is inserted and removed.

Typically, the electrical apparatus includes switching devices such as circuit breakers or network protectors which provide protection, disconnect switches for isolating parts of the distribution system. The electrical apparatus can also include instrumentation such as metering equipment. Switchgear cubicles conventionally includes electrical, movable contacts, which may be opened and closed by maintenance personnel in case of fault in or maintenance of a distribution line. In a particularly useful type of switchgear, the contacts are mounted under oil or in an inert gas atmosphere. As the said contacts of the electrical apparatus are managed by accessing them from either front door or rear cable access door of the cubicle, for example, to quickly disconnect on the rear face of the electrical apparatus, or to engage stabs which connect the electrical apparatus to the appropriate buses of the distribution system.

In a known arrangement, the front door or the rear cable access door of the switchgear cubicle is provided with access openings through which the front face of the electrical apparatus projects for control and monitoring of the electrical apparatus without the need to open the door. Medium voltage electrical components and apparatuses, for example, circuit breakers, potential transformers, current transformers, control power transformers, etc., are often housed in an electrical enclosure called a switchgear cabinet. The switchgear cabinet for medium voltage equipment typically occupies a large space and is difficult to access. As such, maintenance and space considerations are driving factors in the design of new electrical equipment. Switchgear cubicles are provided with safety mechanisms that includes circuit interrupters to protect operators from being exposed to potentially lethal amounts of electrical current running though power distribution centers. Interlocking mechanisms are provided with various components such as earthing switches and said circuit interrupters which allow the operator to manipulate the circuit breaker as needed while preventing direct contact with the circuit breaker when it is coupled to a power supply.

However there exists no such arrangement of cable access doors such that the interlock existing in the earthing switch and other circuit interrupters such as withdrawable vacuum contactors (e.g. CVX) are kept uninterrupted. The existing mechanism of the doors are such designed that an operator can open the door without any knowledge of the status of either the earthing switch or the circuit interrupter. This make the safety of an operator operating the doors at risk. Consequently, maintenance personnel inspecting and servicing the switchgear cabinets have to wear protective gear that is bulky and expensive.

Any fatality can occur if the doors of the switchgear cubicle are opened to access cables therein, at a condition where the earthing switch is at a closed position. Similarly, it is necessary to check that whether the circuit interrupter is either in test position where the electrical connections of the circuit interrupter are disengaged from the power busbars. Additionally, this results in significant economic loss due to interruption of energy distribution, and damage of the switchgear cubicle and the components or equipment accommodated therein. There exists no such cable access mechanism which allows operator to access the cables from both front and rear side of the switchgear cubicle while maintaining the aforementioned interlocks.

With a view therefore to overcome the technical problems associated with conventional access arrangements and mechanisms for electrical cables inside switchgear cubicles, the inventors felt the need to develop a novel cable access arrangement including interlocking mechanism. The present invention proposes to provide a cable access arrangement having interlocking mechanism configured in such manner that, while said earthing switch is in an OFF or open condition and switching devices are at racked-in condition, switching key to operate a door of said switchgear is captive in an arrangement and therefore cables inside said switchgear cannot be accessed. The switching key is only free from said arrangement to operate said door of said electrical cubicle only when said earthing switch is in an ON or closed condition, and said switching device is at test or racked-out condition.

### Summary of the invention

Accordingly, the present invention provides a cable access arrangement having interlocking mechanism for accessing cables within an electrical cubicle, wherein said cable access arrangement comprises:
- an earthing switch assembly operated by an operating handle;
- an access hole for receiving said operating handle;
- a chamber for housing at least an electrical interrupter;
- a switching key to operate a cable access door of said electrical cubicle; and
- a key-lock arrangement to receive said switching key,
wherein said switching key is captive between said earthing switch assembly and said key-lock arrangement such that said access hole is accessible for insertion of said operating handle, when
- said earthing switch assembly is in an OFF or open condition, and
- said electrical interrupter is at racked-in condition; and
wherein said access hole is restricted from insertion of said operating handle such that said switching key is free from said key-lock arrangement to operate said cable access door of said electrical cubicle, when
- said earthing switch assembly is in an ON or closed condition, and
- said electrical interrupter is at test or racked-out condition.

According to one embodiment of the invention, said contractor chamber is a withdrawable unit or compartment.

According to one embodiment of the invention, said switching key is a rear cable access door operation key for accessing cables inside said electrical cubicle.

According to one embodiment of the invention, said front door operation key is adapted to perform opening and closing of said earthing switch assembly.

According to one embodiment of the invention, said rear cable access door operation key is captive between said earthing switch and said key-lock arrangement.

According to one embodiment of the invention, said switching device is a withdrawable switching device.

According to one embodiment of the invention, said earthing switch assembly comprises a switching shaft connected to said key-lock arrangement at its one end.

According to one embodiment of the invention, said electrical interrupter is an electrical contactor or a vacuum circuit breaker.

According to one embodiment of the invention, said a key-lock arrangement mounted at a fascia of side wall of said electrical cubicle.

According to one embodiment of the invention, said key-lock arrangement comprises a key insertion spot for receiving said switching key.

### Brief description of drawings

For better understanding, an illustrative embodiment of the invention will now be described with reference to the accompanying drawings. It will however be appreciated that the embodiment exemplified in the drawings are merely illustrative and not limitative to the scope of the invention, because it is quite possible, indeed often desirable, to introduce a number of variations in the embodiment that have been shown in the drawings. In the accompanying drawings:
Figure 1 depicts front side view of an electrical cubicle with its front door being open to access the front cable showing the conduits and electrical components therein, according to one embodiment of the invention.
Figure 2 depicts a perspective view of the electrical cubicle with its front cable access door being open and its rear cable access door being in a closed state, according to one embodiment of the invention.
Figure 3 depicts a perspective view of a switchgear cubicle with both of its front cable access door and its rear cable access door being in an open state.
Figure 4 depicts a perspective view of the earthing switch assembly showing the provision for engagement of a key-lock arrangement, according to one embodiment of the invention.
Figure 5 is a schematic diagram depicting a detailed view of operating handle position during earthing switch in the open (or isolation condition) power contact of the switchgear i.e. OFF condition.
Figure 6 is a schematic diagram depicting a detailed view moving contact of earthing switch assembly during its open power contact i.e. off condition or isolation condition of power contacts of the switchgear.
Figure 7 is a schematic diagram depicting a detailed view of handle position during earthing switch in the close condition or engagement condition of power contacts of the switchgear.
Figure 8 is a schematic diagram depicting a detailed view of earthing switch moving contact during earthing switch in the closed condition or engagement condition of power contacts.
Figures 9(a) and 9(b) depict a perspective view of the operating handle being engaged with the switchgear cubicle.
Figure 10 is a perspective view of the switchgear cubicle with its front door being open to access the front cable showing the key-lock arrangement and slider plate related to the interlocking mechanism, according to one embodiment of the invention.
Figure 11 is a front side view of the switchgear cubicle with its front door being in a closed position, showing the key block arrangement and the panel with earthing system, according to one embodiment of the invention.
Figure 12 depicts a Interlock logic between earthing switch and contactor unit withdraw ability position according to one embodiment of the invention
Figures 13 depicts a perspective view of the withdrawable chamber for containing the electrical interrupters.
Figure 14 depicts a perspective view earthing switch assembly in its OFF condition and handle access is available for earthing operation without defeating any interlocking mechanism, according to one embodiment of the invention.
Figure 15 depicts perspective view earthing switch is in ON condition & handle access is blocked for earthing operation with the interlocking mechanism according to one embodiment of the invention.
Figure 16 depicts a perspective detailed view of interlock rod between earthing switch and contactor unit.
Figure 17 is a perspective view of mounting of the key block arrangement is with the side wall of cubicle and key support structure inside the Circuit breaker or Contactor chamber.
Figure 18 depicts a schematic diagram of earthing switch assembly at its OFF or open condition with the operating key captive within key-lock arrangement and said earthing switch assembly.
Figure 19 depicts a schematic diagram of earthing switch assembly at its ON or closed condition with the operating key being free from said key-lock arrangement.

### Detailed description of the invention

In the following, numerous specific details are set forth to provide a thorough description of the preferred embodiment. Those skilled in the art will recognize and appreciate that, despite of the detailed nature of the exemplary embodiments provided here; changes and modifications may be applied to said embodiments without limiting or departing from the generally intended scope. Like numbers refer to like elements throughout.

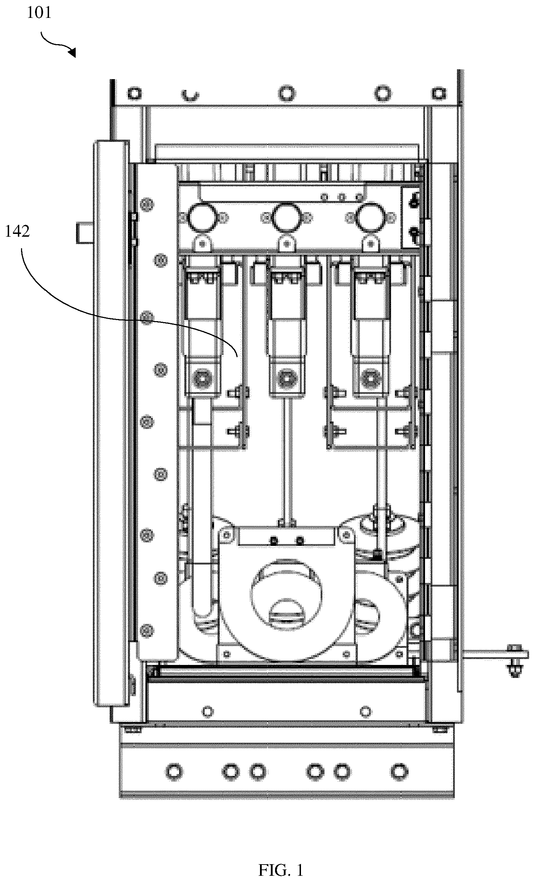

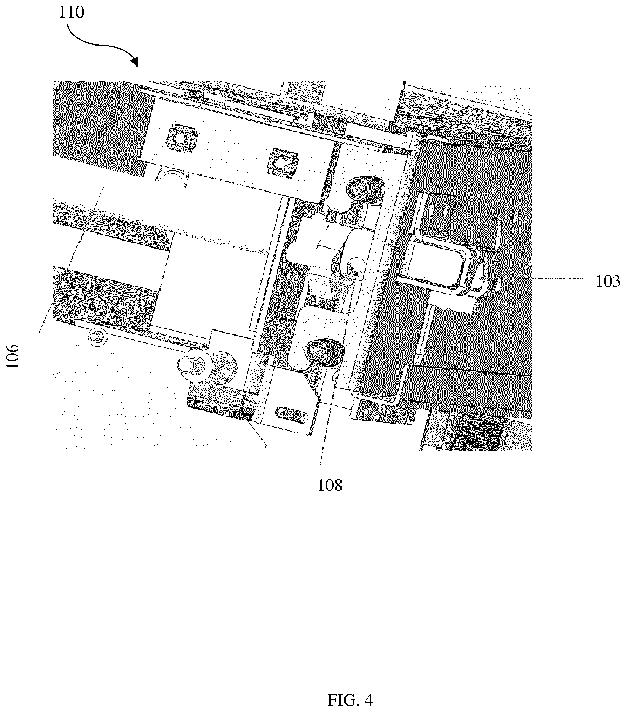

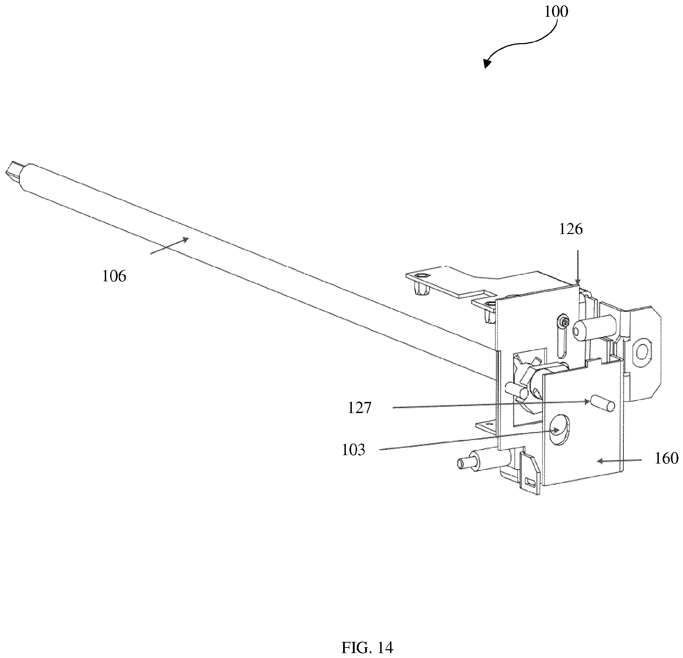

With reference to figures 1 to 3 of the accompanying drawings, an insulated electrical cubicle (101) is depicted having electric cables and conduits enclosed therein to operate the electrical devices installed within said electrical cubicle (101). Now, with invented cable access arrangement (100), at the time of maintenance and routine check-up, an operator is required to access the cables, particularly the rear cables inside without any need to open the entire sheet metal to uncovering the entire rear portion of the switchgear cubicle. With reference to figures 4 and 14, the cable access arrangement (100) comprises an earthing switch assembly (110) which is operated by an operating handle (102). The operating handle (102) is inserted through an access hole (103) to be engaged to the earthing switch assembly (110), where the access hole (103) is formed on a moving plate (160).

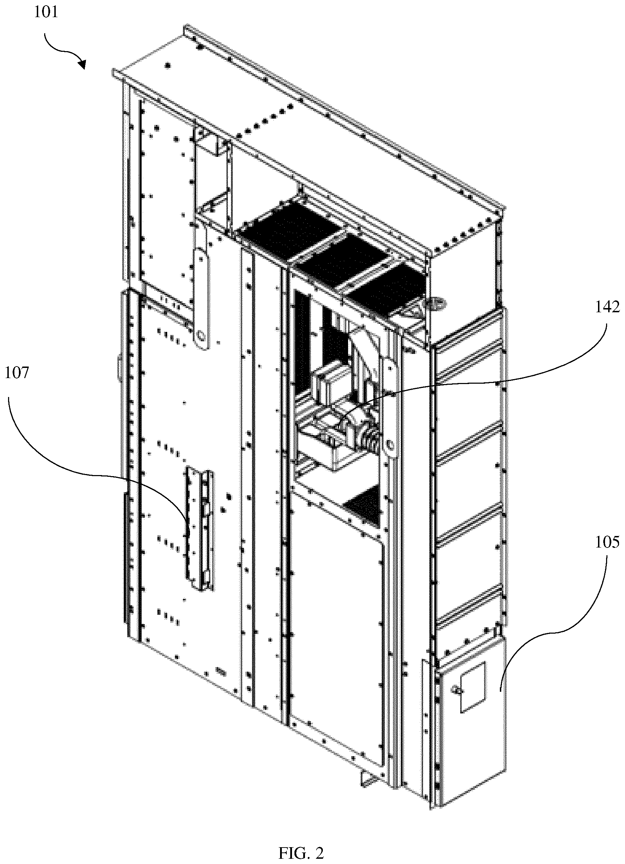

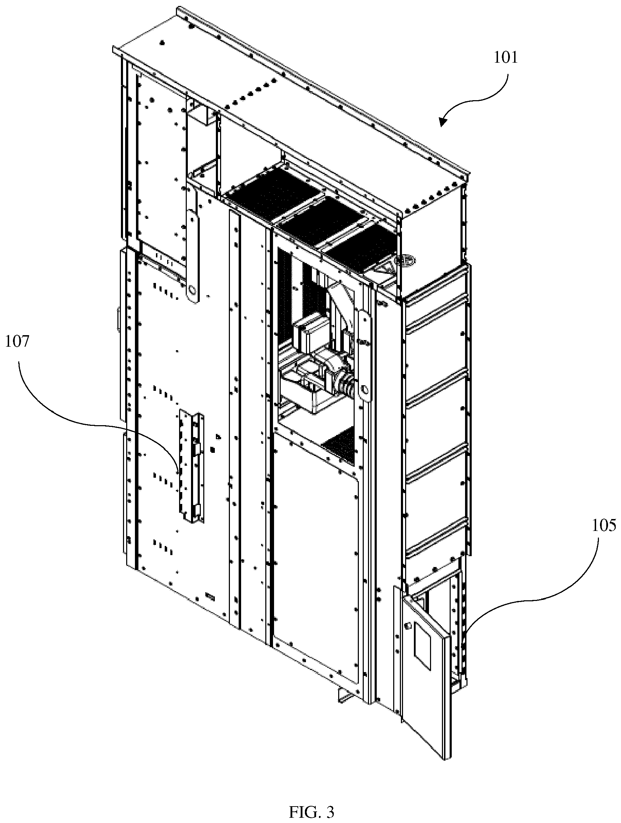

With reference to figures 2 and 3, a split and door design is added to gain the access to the rear cable which enables customer for easy access at rear for cable connection. A switching key (128) is used to operate a cable access door (105,107) of said electrical cubicle and a key-lock arrangement (104) is provided to receive said switching key (128). The rear cable access door (105) is interlocked with various electrical interrupter (122) such as, earthing switch assembly (110) and operational electrical contactors (140), e.g. CVX. Additionally, the rear cable access door (107) is provided with glass window (118) for visual check and optionally, provided with infra-red (IR) window (118) for temperature imaging.

In the particular embodiment shown in the figures, the electrical cubicle (101) is an air-insulated switchgear (AIS) cubicle with plurality of withdrawable units installed therein. Among other units, said electrical interrupter (122) is installed such that at the time of inspection and maintenance, it can be withdrawn from the panels of the electrical cubicle (101). The fascia of the said electrical contactor (140) or vacuum circuit breaker (138) within its chamber is fitted with interlocks for earthing switch assembly (110) and withdrawable units.

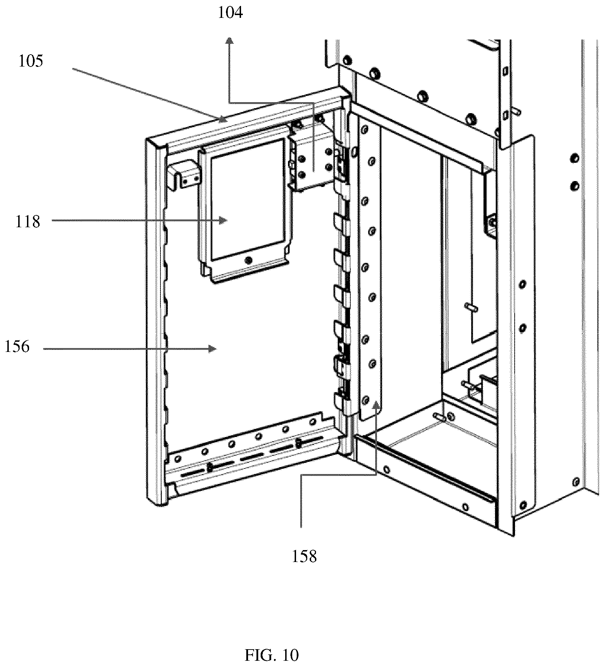

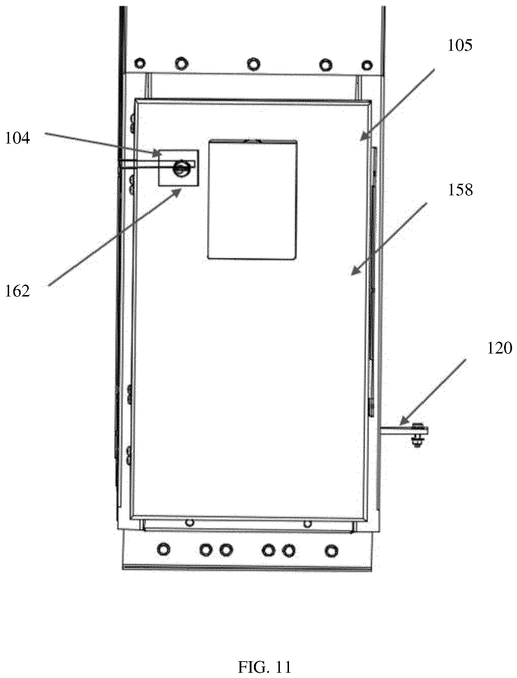

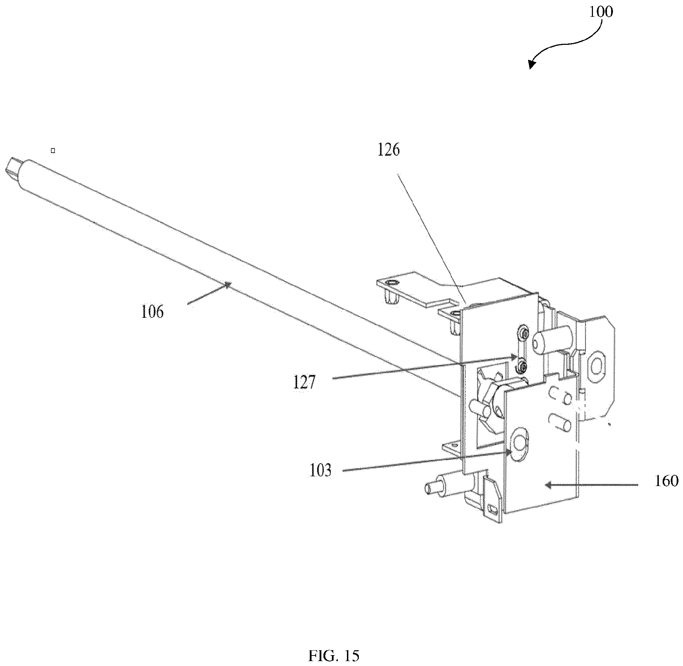

Further, with reference to figure 10 and 11 of the accompanying drawings, the key-lock arrangement (104) is disposed at front facia (156) of rear cable access door (105) of the electrical cubicle (101) along with a panel earthing system (120). From outside of the rear cable access door (105), the locking profile of the key-lock arrangement (104) is depicted in figure 11 with a locking profile block (162). As shown in at least figure 14 and 15 of the accompanying drawings, the earthing switch assembly (110) which is operated by turning of an earthing switch shaft (106), hereinafter referred as shaft, which in turn pertains to the operation of earthing switch. The shaft (106) is rotated by employing an operating handle (102) and with rotational force applied on it. With reference to figure 4, adjacent to one end of said shaft (106), a receiving portion for said operating handle (102), preferable in the form of an access hole (103). The access hole (103) is further configured to be interlocked with said key-lock arrangement (104) and function as a receptacle thereof. The other end of the shaft (106) with engaged with the earthing switch assembly (110) via a shaft engagement unit (108). According to one of the objects of the invention, said key-lock arrangement (104) is operable with a switching key (128). Once the earthing switch assembly (110) is closed by said operating handle (102), the switching key (128) will be free, otherwise the switching key (128) is locked. Thus, as the earthing switch assembly (110) is kept at an open state, the switching key (128) remains captive between said earthing switch assembly (110) and key-lock arrangement (104).

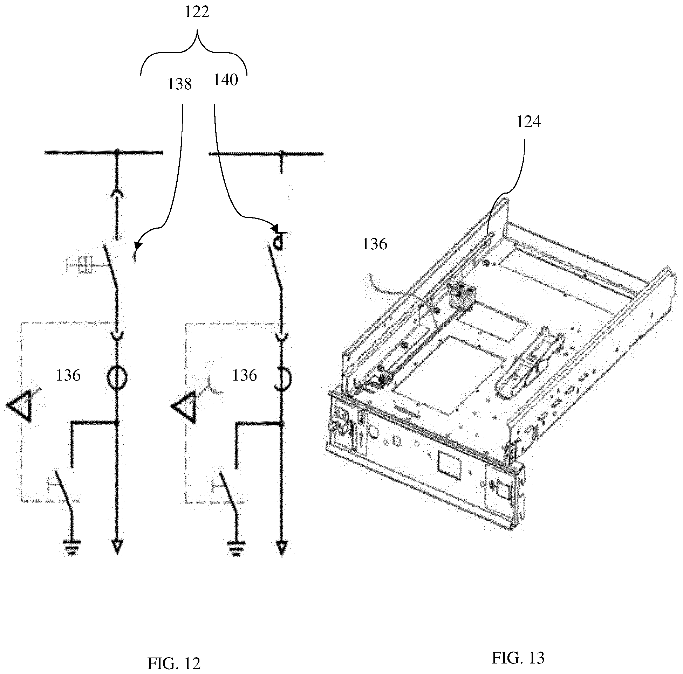

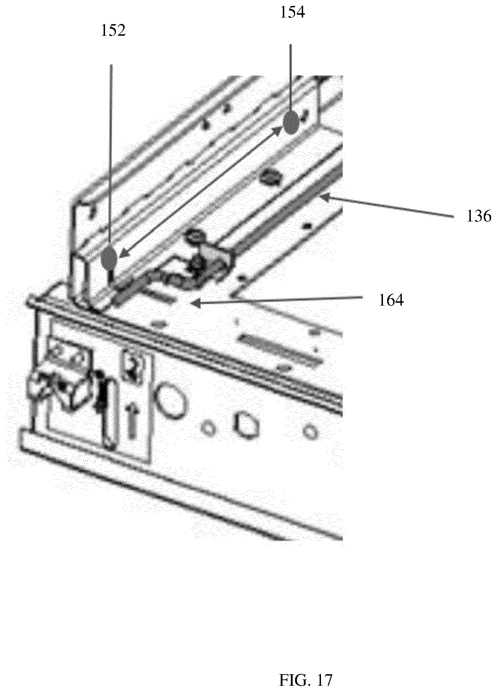

With reference to figures 10 to 13 and 17, the withdrawable chamber (124), housing the electrical interrupter (122) such as electrical contactors (140) and vacuum circuit breakers (138), is movable between its isolation position and service position (154), with the test position (152) in between. Adjacent to the test position (152), an aperture (164) for blocking the electrical contactor (140) or withdrawable chamber (124) or vacuum circuit breaker (138) is also provided. Below the racking operation of the withdrawable chamber (124) with respect to moving from test position (152) to service position (154) is described.

The withdrawable chamber (124) is racked inside electrical cubicle (101), the electrical contactor (140) are disposed inside said chamber (124). The chamber is then locked inside cubicle. Test condition or position (152) of the electrical contactor (140) is when it is just placed inside the withdrawable chamber (124) then placed to the electrical cubicle (101) and locked and low-voltage plug is attached. At this condition the front cable access door (107) and rear cable access door (105) of the cubicle is locked. Movement of the electrical contactor (140) is restricted inside the cubicle which is here termed as test condition of the electrical contactor (140) or withdrawable chamber (124) or vacuum circuit breaker (138). In test condition, contacts of the electrical contactor (140) or withdrawable chamber (124) or vacuum circuit breaker (138) are not engaged with cubicle power contacts (142). On the other hand, in service condition, their contacts are engaged with corresponding cubicle power contacts (142).

The withdrawal process is nothing but movement of the electrical contactor (140) or withdrawable chamber (124) or vacuum circuit breaker (138) inside the panel of the electrical cubicle (101). Racking process is possible with aid of features incorporated with electrical contactor (140) and access to the cable access doors (105,107). A separate handle is provided with for operation of earthing switch assembly (110). Also, there is a separate racking rack out operation of the withdrawable electrical contactor (140). Accordingly, the electrical contactor (140) has lead screw and nut arrangement. Medium voltage door has handle access which allows the passage of handle inside the cubicle to ensure the movement of contactor or withdrawable or vacuum circuit breaker inside the contactor chamber with said separate racking rack out operation. The racking in and racking out operation of the handle is carried out with the cable access doors (105,107) being in a closed position. The key-lock arrangement (104) is fixed with a frame on the cable access door (105,107). The door in the medium voltage switchgear is a pick place type arrangement, it is to be just lifted and placed so that it will be locked with locking plates (158) which is fixed to said frame. The locking plate (158) in this preferred embodiment as shown in figure 10 is provided with toothed-profiles.

This process ensures the operator safety. Thus, racking in operation is defined taking the electrical contactor (140) or the vacuum circuit breaker (138) from test position (152) to service position (154). Racking out operation is defined taking the electrical interrupters (122) from service position (154) to test position (152).

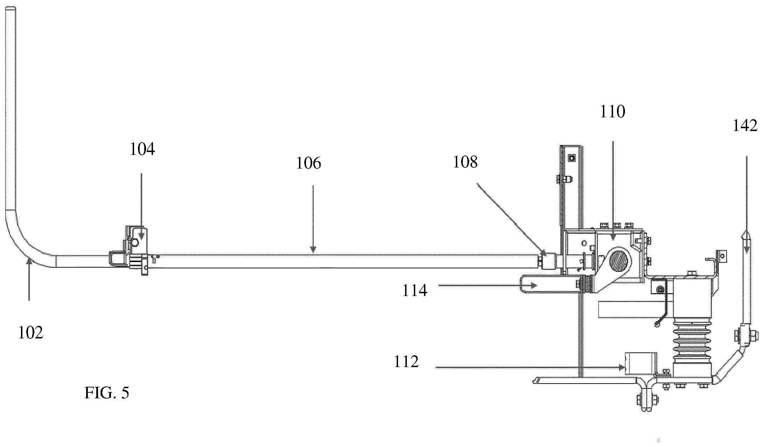

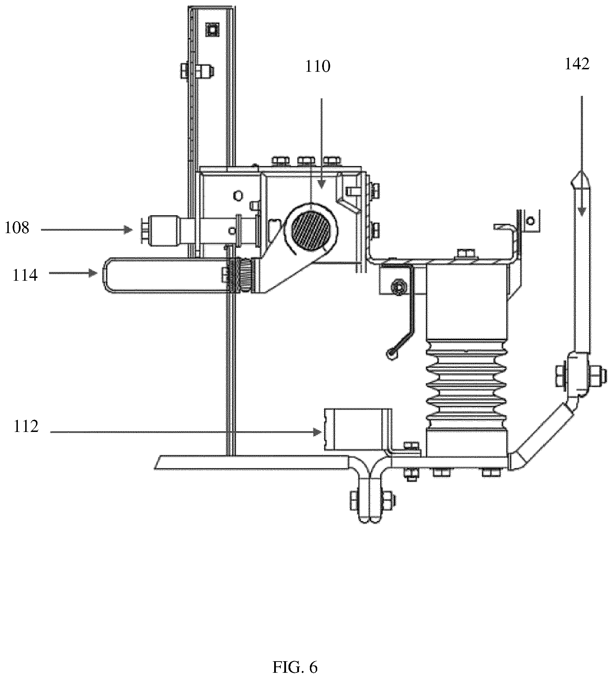

With reference to the accompanying drawings, in figure 5 and figure 6 the schematic diagram of earthing switch assembly (110) is at an open or OFF condition. The fixed contact (112) which is electrically connected with the power contacts (142) of said electrical cubicle (101), is not in any contact with the moving contact (114). Since in this condition moving contact (114) is disengaged with the fixed contact (112), the earthing switch assembly (110) remains in the OFF condition.

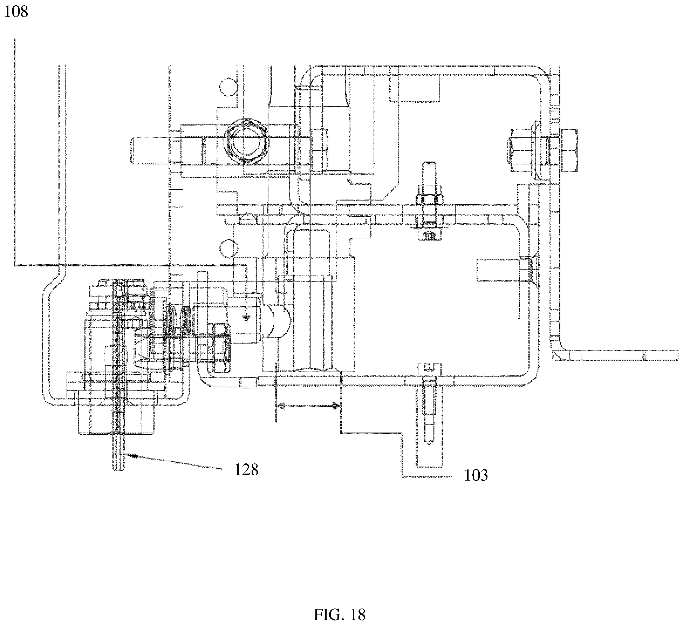

Further as depicted in figure 18, in such open condition of the earthing switch assembly (110), the switching key (128) remains captive. When the operating handle (102) is inserted through access hole (103), it will not be engaged with the shaft (106) due to its unavailability. Thus the operating handle (102) is kept disengaged from the shaft (106) and cannot be rotated as the earthing switch assembly (110) has no power coming from open power contact (142) i.e. at OFF condition or isolation condition of power contacts (142) of the cubicle.

Furthermore, according to the interlocking mechanism depicted in figure 14, the switching key (128) remains captive i.e. engaged with the key-lock arrangement (104), it cannot be used for operation of the rear cable access door (105) or front cable access door (107) of the electrical cubicle (101). In this situation when earthing switch is OFF and electrical interrupter (122) is racked-in i.e. at service position (154), then slider plate (126) cannot be operated as interlocking rod (136) remains below the electrical interrupter (122). Hence, the interlocking rod (136) is blocked from vertical movement and consequently the operator cannot put the operating handle (102) inside the cubicle door to operate the earthing switch assembly (110). The earthing switch assembly (110) remains at the OFF position and cannot be changed to ON position. So in this way this interlock is ensures the safety aspect of operator.

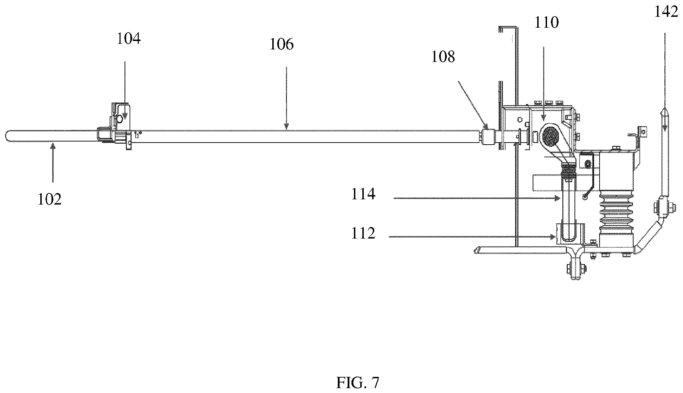

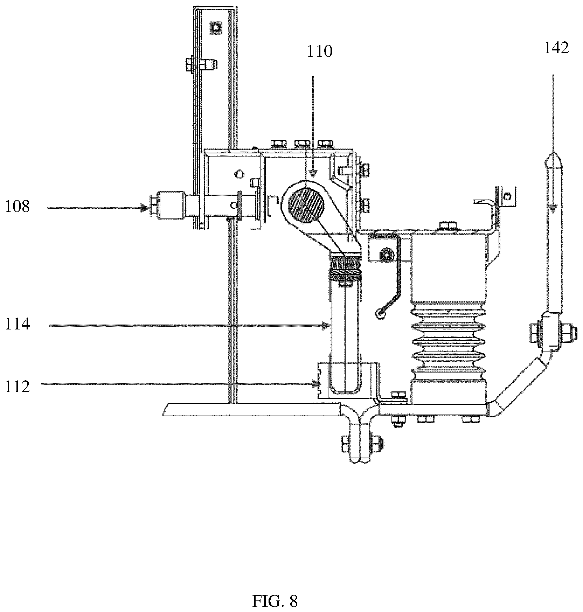

With reference to the accompanying drawings, in figure 7 and figure 8 the schematic diagram when the earthing switch assembly (110) is brought to a closed or ON condition. As the electrical interrupter (122) is brought to test position or racked-out condition, the operating handle (102) is inserted through access hole (103). The operating handle (102) gets engaged with the shaft (106) and thereupon it is rotated by applying torque on the operating handle (102). The shaft (106) is connected with said operating handle (102) is rotated the moving contact (114) starts moving towards said fixed contact (112) and comes in contact with it which is electrically connected with the power contacts (142) of said electrical cubicle (101).

With reference to figure 15, when the electrical interrupter (122) is at test position (152) or racked-out condition and earthing switch assembly (110) is in ON condition, then slider plate (126) can invoke to electrical contactor (140) and thus operate interlocking rod (136) in vertical position. In this condition, the switching key is free which can be used to rear door operation. However, the operating handle is locked within the access hole (103). As the access hole (103) in unavailable, one cannot operate said earthing switch assembly (110). So in this way this interlock ensures the safety aspect of an operator. This interlock design as depicted in the accompanying drawings are explained for basic feeder type electrical cubicle (101) having vacuum circuit breaker (138) or electrical contactor (140) and the earthing switch assembly (110) of the electrical cubicle (101).

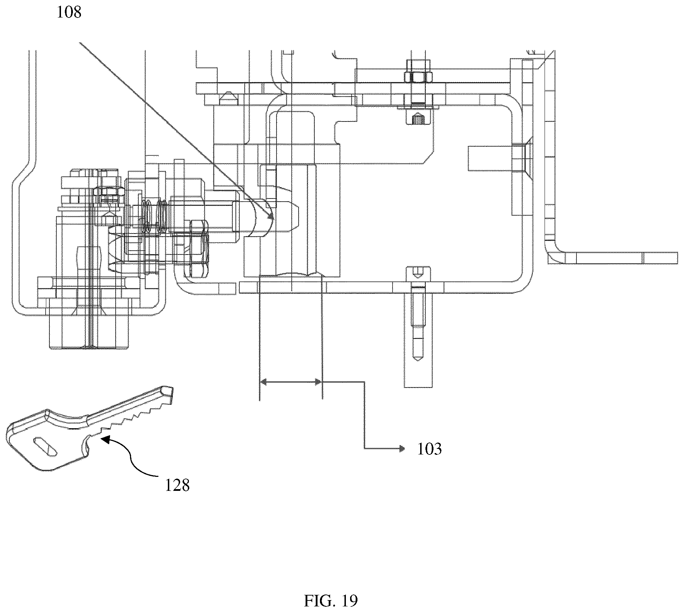

After this operation, as depicted in figure 15 along with figure 19, in such closed condition of the earthing switch assembly (110), the switching key (128) is free from its captive position and the operator can use said switching key (128) for accessing the rear cable access door (105). Without this switching key (128) an operation cannot perform the racking of the withdrawable chamber (124) inside the cubicle.

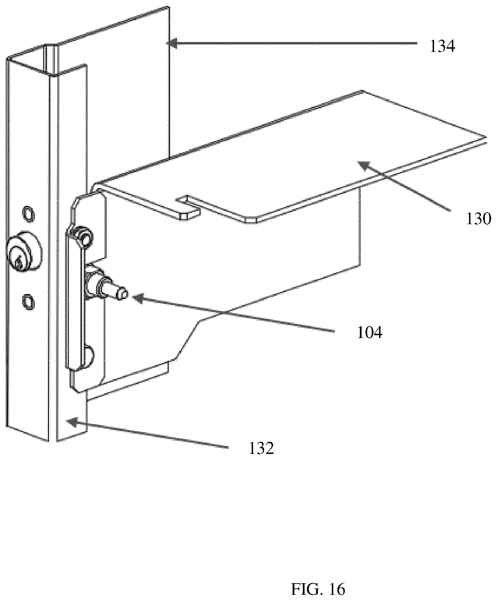

An integrated connection of the key-lock arrangement (104) and the earthing switch assembly (110) is shown in figure 16. This enables the interlocking mechanism between the key-lock arrangement (104) integrated with operation mechanism of the earthing switch assembly (110). Mechanism of operating earthing switch assembly (110) includes the shaft (106) which connects the toggle forces by the operating handle (102) to moving contacts (114) of the earthing switch assembly (110). The key-lock arrangement (104) is mounted with the side wall support portion (134) at the side walls (132) of electrical cubicle (101) and key support plate (130).

Further, the interlocking principle in respect of the position of the withdrawable chamber (124) with the electrical interrupters (122) is provided below:
- Racking-in the withdrawable chamber (124) from racked-out, i.e. disconnected position is possible if the earthing switch assembly (110) is in open i.e. OFF condition.
- Closing i.e. turning earthing switch assembly (110) ON is only possible if the withdrawable chamber (124) is at end-disconnected position i.e. racked-out.

Therefore, if the earthing switch assembly (110) is still closed i.e. at ON condition, racking-in the withdrawable chamber (124) is not possible. Also, if the withdrawable unit is still at moving or service position, closing the earthing switch assembly (110) is not possible.

The below table demonstrates the connection between power contacts (142) engagement vs. availability of switching key (128)

**Table: 1**

| Sr. no | Operation unit | Position | Power Contacts | Handle | Key position | Rear cable access door operation |
|---|---|---|---|---|---|---|
| 1. | Earthing switch | ON | ON or Engaged | Rotated by 90 degree | Free & available | Possible |
| 2. | Earthing switch | OFF | OFF or Isolated | No handle rotated | Captive / blocked | Not possible |

From the above table it is clarified the condition of the switching key (128) availability and rear cable access door (105) operation possibilities.

Therefore both the following conditions have to be met under which the switching key (128) is free to access the front or rear cable access door (105).
(i) The electrical interrupter (122) i.e. the electrical contactor (140) or vacuum circuit breaker (138) is at test position (152) or at a racked-out position in the withdrawable chamber (124) which for example is a circuit breaker compartment; and
(ii) Earthing switch assembly (110) must be in the close condition.

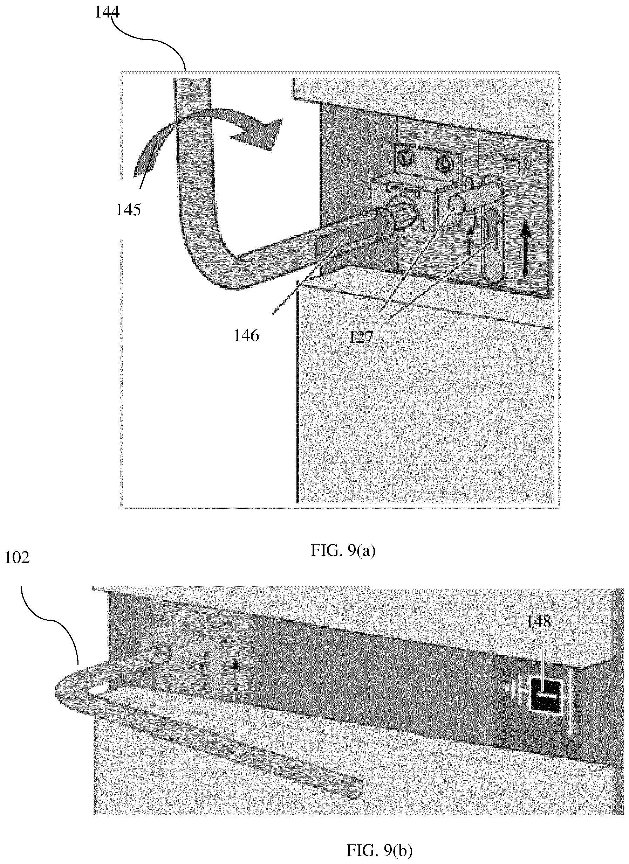

Further, processing of turning of earthing switch ON is depicted in figures 9(a) and 9(b). With reference to figure 9(a), first, push the slide pin (127) in the direction of upwards and insert the control lever, which is this case is the operating handle (102) is pushed in a direction (146) toward the access hole (103). The lever rod (144) of the operating handle is pointing in a direction of upwards. Further, turn the lever clockwise direction (145) by approx. 95°. Next, as shown in figure 9(b), check position indication (148) for getting the status of the earthing switch assembly (110). In this particular case, position indicator (148) should indicate that the earthing switch assembly (110) is ON. Then remove the operating handle (102). Furthermore, the panels of the electrical cubicle (101) can be equipped with additional cylinder locks to lock the cable compartment cover and the front cable access door (107).

The following steps are to be executed to open the rear cable access door (105):
- Check the electrical interrupters (122), which should be in test position (152) or racked-out position inside the electrical cubicle (101).
- Turn the earthing switch assembly (110) in close or earthed condition.
- Take the switching key (128) for the earthing switch assembly and use it to open rear cable access door (105) for accessing cables. Unless rear cable access door is closed, the switching key (128) will be blocked.
- Close the rear cable access door (105) and lock it and then take out the key. Which can be again used for operating the earthing switch assembly (110) again.

As an optional feature, cylindrical locking means are disposed to aid the interlocks in the panels which can be equipped with said additional cylinder locks to lock the cable compartment cover and the front door of the electrical cubicle (101).

In figure 10 rear cable access door (105) of the electrical cubicle is shown in open condition wherein the switching key (128) is captive between the key-lock arrangement (104) and the earthing switch assembly (110). With the invented cable access arrangement (100), cable inside the electrical cubicle (101) are accessed from both front and rear cable access door (105,107) without defeating the interlocking scheme for cable earthing and open cable door operation. Therefore, cable testing can be done from front as well. This cable access arrangement (100) is configured for accessing the cables and can be extended to cubicles other than motor control cubicles which may or may not have a hinge type door.

As already mentioned, the foregoing description is illustrative of the invention and not limitative to its scope, because it will be apparent to persons skilled in the art to devise other alternative embodiments without departing from the broad ambit of the disclosures made herein.

### Part-List:

| | | | |
|---|---|---|---|
| Cable access arrangement | 100 | Support plate | 130 |
| Electrical cubicle | 101 | Side walls of the cubicle | 132 |
| Operating handle | 102 | Side wall support portion | 134 |
| Access hole | 103 | Interlocking rod | 136 |
| Key-lock arrangement | 104 | Circuit breaker | 138 |
| Rear cable access door | 105 | Electrical contactor | 140 |
| Earthing switch shaft | 106 | Power contacts | 142 |
| Front door | 107 | Lever rod | 144 |
| shaft engagement unit | 108 | Direction | 145 |
| Earthing switch assembly | 110 | Direction | 146 |
| Earthing switch fixed contact | 112 | Position indication | 148 |
| Earthing switch moving contact | 114 | Test position | 152 |
| Window | 118 | Service position | 154 |
| Panel earthing system | 120 | Front facia | 156 |
| Electrical interrupter | 122 | Locking plate | 158 |
| Chamber | 124 | Moving plate | 160 |
| Slider plate | 126 | Locking profile block | 162 |
| Slide Pin | 127 | Aperture | 164 |
| Switching key | 128 | | |

## Claims

1. A cable access arrangement (100) having interlocking mechanism for accessing cables within an electrical cubicle (101), wherein said cable access arrangement (100) comprises:
- an earthing switch assembly (110) operated by an operating handle (102);
- an access hole (103) for receiving said operating handle (102);
- a chamber (124) for housing at least an electrical interrupter (122);
- a switching key (128) to operate a cable access door (105 or 107) of said electrical cubicle (101); and
- a key-lock arrangement (104) to receive said switching key (128),
wherein said switching key (128) is captive between said earthing switch assembly (110) and said key-lock arrangement (104) such that said access hole (103) is accessible for insertion of said operating handle (102), when
- said earthing switch assembly (110) is in an OFF or open condition, and
- said electrical interrupter (122) is at racked-in condition; and
wherein said access hole (103) is restricted from insertion of said operating handle (102) such that said switching key (128) is free from said key-lock arrangement (104) to operate said cable access door (105 or 107) of said electrical cubicle (101), when
- said earthing switch assembly (110) is in an ON or closed condition, and
- said electrical interrupter (122) is at test or racked-out condition.

2. The cable access arrangement (100) as claimed claim 1, wherein said chamber (124) for housing electrical interrupter (122) is a withdrawable unit or compartment.

3. The cable access arrangement (100) as claimed in any of the claims 1 or 2, wherein said switching key (128) is a rear cable access door operation key for accessing cables inside said electrical cubicle (101).

4. The cable access arrangement (100) as claimed in any of claims 1 to 3, wherein said front door switching key (128) is adapted to perform opening and closing of said earthing switch assembly (110).

5. The cable access arrangement (100 as claimed in any of claims 1 to 4, wherein said cable access arrangement (100) comprises a position indication (148) stating the ON and OFF state of the earthing switch assembly (110).

6. The cable access arrangement (100) as claimed in any of claims 1 to 5, wherein said earthing switch assembly (110) comprises a switching shaft (106) connected to said key-lock arrangement (104) at its one end.

7. The cable access arrangement (100) as claimed in claim 1, wherein said electrical interrupter (122) is an electrical contactor (140) and/or a vacuum circuit breaker (138).

8. The cable access arrangement (100) as claimed in any of claims 1 to 7, wherein said a key-lock arrangement (104) mounted at a fascia of side wall (132) of said electrical cubicle (101).

9. The cable access arrangement (100) as claimed in any of claims 1 to 8, wherein said key-lock arrangement comprises slider plate (126) for blocking the insertion of the switching key (128).
